# EUROPEAN PATENT APPLICATION

(11) **EP 4 056 646 A1**
(43) Date of publication of application: **14.09.2022**
(21) Application number: 20884332.6
(22) Date of filing: 15.09.2020
(51) Int. Cl.: C08L 23/12, H01B 9/00, H01B 7/02, C08J 7/04

(54) **RESIN COMPOSITION, RESIN COMPOSITION MOLDED BODY AND POWER CABLE**

(30) Priority: 08.11.2019 JP 2019203150
(71) Applicant: SUMITOMO ELECTRIC INDUSTRIES, LTD., Osaka-shi, Osaka 541-0041 (JP)
(72) Inventor: YAMASAKI Satoshi, Osaka-shi, Osaka 541-0041 (JP); YAMAZAKI Takanori, Osaka-shi, Osaka 541-0041 (JP); IYODA Fumitoshi, Osaka-shi, Osaka 541-0041 (JP)
(74) Representative: Grünecker Patent- und Rechtsanwälte PartG mbB
(86) International application number: PCT/JP2020/034826
(87) International publication number: WO 2021/090579

(57) **Abstract**

A resin composition contains propylene, ethylene, and styrene, and has a melting point of 140°C or more and 150°C or less, and the enthalpy of fusion of the resin composition is 55 J/g or more and 90 J/g or less.

## Description

### Technical Field

The present disclosure relates to a resin composition, a resin composition molded body, and a power cable.

The present application claims the benefit of priority based on Japanese Patent Application "No. 2019-203150" filed on November 8, 2019, which is incorporated herein by reference in its entirety.

### Background Art

Crosslinked polyethylene has been widely used as a resin component for constituting an insulating layer in power cables and the like because crosslinked polyethylene has high insulating properties (e.g., Patent Document 1).

### Citation List

### Patent Documents

Patent Document 1: JP-S57-69611A

### Summary of Invention

According to an aspect of this disclosure, a resin composition contains:
propylene; and
styrene,
in which the resin composition has a melting point of 140°C or more and 150°C or less, and
the enthalpy of fusion of the resin composition is 55 J/g or more and 90 J/g or less.

According to another aspect of this disclosure, a resin composition molded body is a molded body that is made of a resin composition and with which an object is covered at a thickness of 3 mm or more, the molded body containing:
propylene; and
styrene,
in which the molded body has a melting point of 140°C or more and 150°C or less, and
the enthalpy of fusion of the molded body is 55 J/g or more and 90 J/g or less, and
when an outer sample is collected from a position 0.5 mm from a surface of the molded body toward the object and an inner sample is collected from a position 0.5 mm from the object toward the surface,
an absolute value of a difference obtained by subtracting the melting point of the outer sample from the melting point of the inner sample is 8°C or less, and
an absolute value of a difference obtained by subtracting the enthalpy of fusion of the outer sample from the enthalpy of fusion of the inner sample is 10 J/g or less.

According to yet another aspect of this disclosure, a power cable includes:
a conductor; and
an insulating layer with which an outer circumference of the conductor is covered at a thickness of 3 mm or more,
in which the insulating layer contains propylene and styrene,
the molded body has a melting point of 140°C or more and 150°C or less,
the enthalpy of fusion of the molded body is 55 J/g or more and 90 J/g or less, and
when an outer sample is collected from a position 0.5 mm from a surface of the insulating layer toward the conductor and an inner sample is collected from a position 0.5 mm from the conductor toward the surface,
an absolute value of a difference obtained by subtracting the melting point of the outer sample from the melting point of the inner sample is 8°C or less, and
an absolute value of a difference obtained by subtracting the enthalpy of fusion of the outer sample from the enthalpy of fusion of the inner sample is 10 J/g or less.

### Brief Description of Drawings

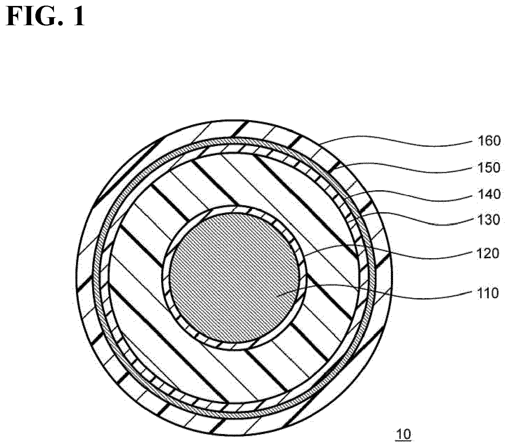

FIG. 1 is a schematic cross-sectional view of a power cable according to an embodiment of this disclosure taken along a direction that is orthogonal to the axial direction of the power cable.

### Description of Embodiments

### [Problem to be Solved by the Present Invention]

Crosslinked polyethylene that has undergone aging and degradation cannot be recycled and is incinerated. Thus, there are concerns about the impact on the environment.

In view of this, in recent years, resin that contains propylene (also referred to as "propylene-based resin", hereinafter) has been gaining attention as a resin component for constituting an insulating layer. Propylene-based resin can satisfy insulating properties required of a power cable, even if it is a non-crosslinked resin. That is, it is possible to achieve insulating properties and recyclability. Furthermore, handleability, workability, and manufacturability can be improved by using propylene-based resin.

The inventors of the present invention conducted studies using a propylene-based resin as a resin component constituting an insulating layer, and they found that it is difficult to ensure various cable properties when the insulating layer had a thickness of 3 mm or more, in particular.

The present disclosure aims to provide a technique by which an insulating layer that contains propylene and has a thickness of 3 mm or more enables various cable properties to be ensured.

### [Effects of the Present Disclosure]

According to the present disclosure, with an insulating layer that contains propylene and has a thickness of 3 mm or more, various cable properties can be ensured.

### [Description of Embodiments of the Present Disclosure]

### <Findings obtained by Inventors>

First, an overview of the findings obtained by the inventors of the present invention will be described.

Usually, polypropylene itself is harder than polyethylene and the like. Also, the low-temperature brittleness resistance of polypropylene itself is lower than that of polyethylene and the like.

The inventors of the present invention confirmed that, when the insulating layer of the power cable was formed using such polypropylene, various desired cable properties cannot be obtained. In particular, this trend becomes more profound when the insulating layer is 3 mm thick or more. "Various cable properties" here are properties required of the power cable, and refer to flexibility, low-temperature brittleness resistance, insulating properties, and water tree resistance, for example.

The inventors of the present invention conducted studies regarding the above point and found that the reason as to why various cable properties cannot be obtained is that the crystallinity (crystal state: size and shape) and the crystal amount (the degree of crystallinity) of the resin component vary in the thickness direction of the insulating layer. Specifically, the insulating layer of the power cable is formed by melting a resin composition and extruding the melted resin composition around a cable core so as to cover the cable core, and cooling the melted resin composition. When this melted resin composition is cooled, the outer surface side thereof is in contact with outside air and thus is likely to cool quicker, whereas the inner side (the conductor side of the insulating layer) is not in contact with outside air and thus takes longer to cool. That is, the cooling speed varies in the thickness direction of the insulating layer. Meanwhile, the crystal growth of polypropylene varies depending on cooling speed, and the crystal amount and the like are likely to change significantly. Specifically, if the cooling speed is high, spherulites are unlikely to grow and the crystal amount is relatively small, whereas if the cooling speed is low, spherulites are likely to grow and the crystal amount is likely to be relatively large. Thus, if the insulating layer is formed thick using only polypropylene, the crystal amount is small on the outer surface side (the degree of crystallinity is low), and the crystal amount is large on the inner side (the degree of crystallinity is high), and the crystal amount changes significantly in the thickness direction. The crystal amount is unlikely to vary when the insulating layer is thin, but is likely to vary when the thickness of the insulating layer is 3 mm or more, and this variation deteriorates various cable properties.

On the other hand, polypropylene is adopted in the technical field of bumpers for automobiles and the like. Here, in order to improve low-temperature brittleness resistance, ethylene-propylene rubber (EPR) or the like is added to polypropylene. EPR can soften a resin composition and improve low-temperature brittleness.

In view of this, in order to improve the flexibility and low-temperature brittleness resistance of an insulating layer in the technical field of power cables, the inventors of the present invention tried adding a low-crystallinity resin such as EPR to a propylene-based resin as a resin component for constituting the insulating layer.

As a result, it was confirmed that, by controlling the crystal growth of the propylene-based resin according to the addition ratio of the propylene-based resin and the low-crystallinity resin, it is possible to suppress variation in the crystal amount in the film thickness direction and improve various cable properties. However, there is a limit to the improvement of various cable properties achieved by simply adjusting the addition ratio. When a low-crystallinity resin is added, for example, the crystal growth of the propylene-based resin can be controlled and variation in the crystal amount can be suppressed. However, the amount of crystals of the propylene-based resin in the entire insulating layer is small, and a desired insulating layer cannot be obtained in some cases. There are cases where various cable properties cannot be obtained at a high level in a well-balanced manner by simply adjusting the addition ratio of the low-crystallinity resin in this manner.

Based on this, the inventors of the present invention conducted studies on components that can control the crystal growth of polypropylene in a similar manner as for a low-crystallinity resin such as EPR, and focused on a styrene-based resin.

Styrene-based resin has lower compatibility with propylene-based resin than low-crystallinity resin does. Therefore, if only a styrene-based resin is added, the styrene-based resin does not dissolve in the propylene-based resin and forms aggregates, which may cause variations in the crystal amount. However, studies conducted by the inventors of the present invention found that, by using a low-crystallinity resin and a styrene-based resin in combination, the styrene-based resin can be finely dispersed starting from the low-crystallinity resin to form a unique phase structure, and, while controlling the crystal growth of the propylene-based resin, the original properties of the propylene-based resin can be obtained and various cable properties can be improved.

The present disclosure is based on the above-described findings found by the inventors of the present invention.

### <Embodiments of the Present Disclosure>

Next, an embodiment of this disclosure will be listed and described.
(1) A resin composition according to an aspect of this disclosure contains propylene;
   ethylene; and
   styrene,
   in which the resin composition has a melting point of 140°C or more and 150°C or less, and
   the enthalpy of fusion of the resin composition is 55 J/g or more and 90 J/g or less.
   According to this configuration, it is possible to ensure various cable properties.
(2) A resin composition molded body according to another aspect of this disclosure is a molded body that is made of a resin composition and with which an object is covered at a thickness of 3 mm or more, and the molded body contains
   propylene;
   ethylene; and
   styrene,
   in which the molded body has a melting point of 140°C or more and 150°C or less, the enthalpy of fusion of the molded body is 55 J/g or more and 90 J/g or less, and
   when an outer sample is collected from a position 0.5 mm from a surface of the molded body toward the object and an inner sample is collected from a position 0.5 mm from the object toward the surface,
   an absolute value of a difference obtained by subtracting the melting point of the outer sample from the melting point of the inner sample is 8°C or less, and
   an absolute value of a difference obtained by subtracting the enthalpy of fusion of the outer sample from the enthalpy of fusion of the inner sample is 10 J/g or less.
   According to this configuration, it is possible to ensure various cable properties.
(3) With the resin composition molded body according to (2) above,
   a residue of a crosslinking agent is less than 300 ppm.
   According to this configuration, it is possible to improve recyclability of the resin composition molded body.
(4) With the resin composition molded body according to (2) or (3) above,
   an AC breakdown electric field at room temperature is 60 kV/mm or more.
   According to this configuration, it is possible to suitably use the resin composition molded body as an insulating layer of the power cable.
(5) A power cable according to another aspect of this disclosure includes:
   a conductor; and
   an insulating layer with which an outer circumference of the conductor is covered at a thickness of 3 mm or more,
   in which the insulating layer contains propylene, ethylene, and styrene,
   the molded body has a melting point of 140°C or more and 150°C or less,
   the enthalpy of fusion of the molded body is 55 J/g or more and 90 J/g or less, and
   when an outer sample is collected from a position 0.5 mm from the surface of the insulating layer toward the conductor and an inner sample is collected from a position 0.5 mm from the conductor toward the surface,
   an absolute value of a difference obtained by subtracting the melting point of the outer sample from the melting point of the inner sample is 8°C or less, and
   an absolute value of a difference obtained by subtracting the enthalpy of fusion of the outer sample from the enthalpy of fusion of the inner sample is 10 J/g or less.
   According to this configuration, it is possible to ensure various cable properties.

### [Detailed Embodiments of the Present Disclosure]

Next, an embodiment according to this disclosure will be described below with reference to the drawings. Note that this disclosure is not limited to these examples, and it is intended that this disclosure is shown by the claims, and that all changes in equivalent meanings and ranges to the scope of the claims are included.

### <Embodiment of the present disclosure>

### (1) Resin composition molded body

An object is covered with a resin composition molded body (also simply referred to as "molded body" hereinafter) according to this embodiment at a thickness of 3 mm or more, for example. Specifically, the resin composition molded body constitutes an insulating layer 130 of a power cable 10, which will be described later, for example. An object for the resin composition molded body is an elongated linear conductor 110, for example. The resin composition molded body is formed through extrusion molding so as to cover the outer circumference of the conductor 110, for example. That is, the resin composition molded body has the same shape in the longitudinal direction of the object, for example. Also, the length of the resin composition molded body in the longitudinal direction of the object is 30 cm or more, and is preferably 50 cm or more, for example.

The molded body according to this embodiment is made of a resin composition, and contains at least the propylene unit, the ethylene unit, and the styrene unit that are derived from resin components. Examples of the resin components include a propylene-based resin, a low-crystallinity resin, and a styrene-based resin. The following describes each component.

### (Propylene-based resin)

A propylene-based resin is a base polymer of the resin composition. Random polypropylene is used as a propylene-based resin because the crystallinity can be easily controlled.

Random polypropylene has a melting point of 140°C or more and 150°C or less, for example. Also, the enthalpy of fusion of random polypropylene is 90 J/g or more and 105 J/g or less, for example. Random polypropylene has an elastic modulus (25°C) of 1000 MPa, for example.

### (Low-crystallinity resin)

A low-crystallinity resin is a component that controls the crystal growth (crystal amount) of the propylene-based resin and imparts flexibility to the resin composition molded body. Also, the low-crystallinity resin acts as a compatibilizer and improves the dispersiveness of the styrene-based resin to the propylene-based resin. Here, the low-crystallinity resin refers to a component that has low crystallinity or is amorphous, and does not have a melting point, and if the low-crystallinity resin has a melting point, the melting point of the low-crystallinity resin is 100°C or less. The enthalpy of fusion thereof is 50 J/g or less, and preferably 30 J/g or less, for example.

From the viewpoint of increasing controllability of the crystal growth and the flexibility of the molded body, the low-crystallinity resin is preferably a copolymer obtained through copolymerization of at least any two of ethylene, propylene, butene, hexene, and octene. Note that the monomer unit for constituting the low-crystallinity resin preferably has a carbon-carbon double bond at α-position, for example.

Examples of the low-crystallinity resin include ethylene propylene rubber (EPR) and very low density polyethylene (VLDPE).

From the viewpoint of compatibility with the propylene-based resin, the low-crystallinity resin is preferably a copolymer containing propylene, for example. Specifically, an example of the copolymer containing propylene is EPR.

The ethylene content in EPR is 20 mass% or more, for example, and preferably 40 mass% or more, and more preferably 55 mass% or more. If the ethylene content is less than 20 mass%, the compatibility of EPR with the propylene-based resin will be excessively high. Thus, even if the EPR content in the molded body is reduced, the molded body can be made flexible. However, crystallization of the propylene-based resin may not be sufficiently controlled, and insulating properties may deteriorate. In contrast, in this embodiment, by setting the ethylene content to 20 mass% or more, it is possible to keep the compatibility of EPR with the propylene-based resin from becoming excessively high. As a result, the crystallization of the propylene-based resin can be sufficiently controlled by EPR while the softening effect of EPR is obtained. As a result, it is possible to suppress deterioration in insulating properties. Furthermore, by setting the ethylene content to preferably 40 mass% or more and more preferably 55 mass% or more, it is possible to stably control crystallization and stably suppress deterioration in insulating properties.

On the other hand, the low-crystallinity resin may be a propylene-free copolymer, for example. From the viewpoint of high availability, VLDPE is preferable as the propylene-free copolymer, for example. Examples of VLDPE include PE constituted by ethylene and 1-butene, and PE constituted by ethylene and 1-octene, for example.

According to a propylene-free copolymer as a low-crystallinity resin, it is possible to suppress complete compatibility while mixing a predetermined amount of the low-crystallinity resin with the propylene-based resin. Therefore, crystallization of the propylene-based resin can be stably controlled by setting such a copolymer content to a predetermined amount or more.

### (Styrene-based resin)

The styrene-based resin is a styrene-based thermoplastic elastomer containing styrene as a hard segment and at least one of ethylene, propylene, butylene, isoprene, and the like as a soft segment. Similarly to the low-crystallinity resin, the styrene-based resin is a component that disperses in the resin composition and controls the crystal growth of the propylene-based resin, and suppresses variation in the crystal amount in the thickness direction of the insulating layer. Also, the styrene-based resin traps electrons with an aromatic ring to form a stable resonance structure, and serves as an elastomer to suppress the occurrence of mechanical stress cracks in the molded body, and thus also contributes to improving water tree resistance of the molded body.

Examples of the styrene-based resin include a styrene-butadiene-styrene block copolymer (SBS), a hydrogenated styrene-butadiene-block copolymer, a styrene-isoprene-styrene copolymer (SIS), a hydrogenated styrene-isoprene-styrene copolymer, hydrogenated styrene-butadiene rubber, hydrogenated styrene-isoprene rubber, and a styrene-ethylene-butylene olefin crystal block copolymer. These may be used in combination of two or more.

Note that "hydrogenated" here refers to the addition of hydrogen to a double bond. A "hydrogenated styrene-butadiene-styrene block copolymer" refers to a polymer obtained by adding hydrogen to double bonds of a styrene-butadiene-styrene block copolymer, for example. Note that hydrogen is not added to double bonds in an aromatic ring of styrene. A "hydrogenated styrene-butadiene-styrene block copolymer" can also be referred to as a styrene-ethylene-butylene-styrene block copolymer (SEBS).

A styrene-based resin that has no double bond in its chemical structure other than the benzene ring is preferable. If a styrene-based resin having a double bond is used, the resin component may thermally deteriorate when the resin composition is molded, and properties of the molded body to be obtained may deteriorate. In this respect, a styrene-based resin having no double bond is highly resistant to thermal deterioration, and thus properties of the molded body can be kept at a higher level.

There is no particular limitation on the styrene content in the styrene-based resin, and from the viewpoint of controlling the crystal growth of the propylene-based resin and softening the molded body, the styrene content is preferably 5 mass% or more and 35 mass% or less.

### (Resin composition)

The resin composition for constituting the molded body according to this embodiment contains the above-described propylene-based resin, low-crystallinity resin, and styrene-based resin. This resin composition includes, in its chemical structure, at least a propylene unit and an ethylene unit that are derived from random polypropylene, which is a propylene-based resin, and the styrene unit derived from the styrene-based resin when the resin composition is analyzed using a nuclear magnetic resonance (NMR) device. Note that the propylene unit and the ethylene unit may be derived from polymers such as EPR, which is a low-crystallinity resin.

Also, from the viewpoint of recyclability, the resin composition for constituting the molded body is preferably not crosslinked and made non-crosslinked. Alternatively, even if a resin composition is crosslinked, it is preferable that the resin composition is crosslinked such that the gel fraction (the degree of crosslinking) thereof is low. Specifically, it is preferable that the resin composition is crosslinked at a degree of crosslinking such that the residue of a crosslinking agent in the resin composition molded body is less than 300 ppm. Note that, if dicumyl peroxide is used as a crosslinking agent, examples of the residue include cumyl alcohol and α-methylstyrene.

### (Melting point and enthalpy of fusion of molded body)

The molded body according to this embodiment can be formed by extruding the melted resin composition around an object so as to cover the object at a thickness of 3 mm or more, and cooling the melted resin composition, for example. The above-described resin composition is formed by mixing the low-crystallinity resin and the styrene-based resin with the propylene-based resin. Thus, when the melted resin composition is solidified through cooling, it is possible to suppress excessive crystal growth of the propylene-based resin. Furthermore, the crystal growth thereof can be controlled by appropriately adjusting the ratio of the low-crystallinity resin and the styrene-based resin. Therefore, even if a molded body with a thickness of 3 mm or more is produced, it is possible to suppress a difference in crystal growth caused by a difference in the cooling speed between the outer surface side and the inner side, and to suppress variation in the crystal amount in the thickness direction. Specifically, it is possible to reduce the difference in the enthalpy of fusion of the resin composition and the difference in melting point of the resin composition that are indexes of the crystal amount (the degree of crystallinity) on the outer surface side and the inner side of the molded body.

Here, the melting point and the enthalpy of fusion of the molded body will be described.

The resin composition that constitutes the molded body of this embodiment has a melting point of 140°C or more and 150°C or less, and the enthalpy of fusion thereof is 55 J/g or more and 90 J/g or less. While the crystal amount in the molded body varies slightly in the thickness direction, this variation is small. Therefore, even if a sample is collected from any position of the molded body, the melting point and the enthalpy of fusion are within the above-described ranges. That is, the melting point and the enthalpy of fusion of samples that are respectively collected from the outer surface side and the inner side of the molded body are within the above ranges.

The molded body has a melting point of 140°C or more and 150°C or less. Because the molded body contains a propylene-based resin (random polypropylene) with a high melting point and a low-crystallinity resin and a styrene-based resin that do not have a melting point or have no melting point, the melting point of the molded body is lower than the original melting point (140°C to 150°C) of the random polypropylene. If the melting point of the molded body is less than 140°C, the molded body contains a large amount of the low-crystallinity resin and the styrene-based resin. If the melting point of the molded body is more than 150°C, the molded body contains a large amount of the propylene-based resin. Thus, blending balance between components deteriorates, and various cable properties cannot be ensured. When the molded body has a melting point of 140°C to 150°C, it is possible to achieve an appropriate blending balance in which various cable properties can be ensured.

Also, the enthalpy of fusion of the molded body is 55 J/g or more and 90 J/g or less. Because the molded body contains a crystalline propylene-based resin (random polypropylene) and a low-crystallinity resin and a styrene-based resin that form a smaller amount of crystals than the propylene-based resin, the enthalpy of fusion of the molded body is lower than the original enthalpy of fusion of the random polypropylene (90 J/g to 105 J/g).

The enthalpy of fusion varies depending on the crystal amount in the resin composition, that is, depending on the blend amounts of the propylene-based resin, the low-crystallinity resin, and the styrene-based resin, and thus serves as an index of the ratio of the components.

If the amount of the added low-crystallinity resin and the added styrene-based resin in the molded body is large and the amount of the blended crystalline propylene-based resin is excessively small, the degree of crystallinity in the molded body will be low (the crystal amount is small). If the crystal amount in the molded body is in a range such that the enthalpy of fusion is less than 55 J/g, the crystal amount will be excessively small, and desired insulating properties cannot be ensured. In contrast, the insulating properties of the molded body can be improved by controlling the crystal amount by adjusting the ratio of the components such that the enthalpy of fusion of the molded body is 55 J/g or more.

On the other hand, if the crystal amount in the molded body is in a range such that the enthalpy of fusion is more than 90 J/g, the amount of low-crystallinity resin and the amount of the styrene-based resin are small, and the molded body is close to being a propylene homopolymer itself. In this case, the crystal amount is excessively large, and thus the molded body is hard and has poor low-temperature brittleness resistance. Also, because the crystal growth of the propylene-based resin cannot be sufficiently controlled in the molded body, the spherulites become excessively large, and thus the insulating properties may deteriorate due to microcracks in the spherulites. Furthermore, because the growth of coarse spherulites reduces the amount of amorphous regions, water is likely to concentrate at the interface between spherulites. As a result, water tree resistance may decrease. In contrast, the molded body can be softened and low-temperature brittleness can be improved by controlling the crystal amount by adjusting the ratio of the components such that the enthalpy of fusion of the molded body is 90 J/g or less. Also, it is possible to suppress deterioration in insulating properties caused by microcracks in the spherulites of the molded body. Furthermore, by suppressing the growth of coarse spherulites and securing amorphous regions, it is possible to keep water from concentrating at the interface between spherulites, and to improve the water tree resistance of the resin composition molded body.

As described above, variation in the crystal amount decreases in the thickness direction of the molded body according to this embodiment. Thus, when an outer sample is collected from a position 0.5 mm from the surface of the molded body toward an object and an inner sample is collected from a position 0.5 mm from the object toward the surface, and differential scanning calorimetry (DSC) is performed on the outer sample and the inner sample, the difference in melting point and the difference in the enthalpy of fusion decrease between the inner sample and the outer sample. Specifically, the absolute value of the difference obtained by subtracting the melting point of the outer sample from the melting point of the inner sample (also simply referred to as "difference in melting point" hereinafter) is less than or equal to 8°C. The absolute value of the difference obtained by subtracting the enthalpy of fusion of the outer sample from the enthalpy of fusion of the inner sample (also simply referred to as "difference in the enthalpy of fusion" hereinafter) is less than or equal to 10 J/g.

It is conceivable that, if the difference in melting point is higher than 8°C or the difference in the enthalpy of fusion is more than 10 J/g, for example, on the inner side of the molded body, the crystal growth cannot be sufficiently controlled and spherulites of the propylene-based resin grow to be coarse, or, as the crystallization progresses, the crystal amount increases, which causes a large difference in the crystal amount between the inner side and the outer surface side. Therefore, as described above, it is difficult to ensure the flexibility, low-temperature brittleness resistance, insulating properties, and water tree resistance, which are examples of the various cable properties. In contrast, the flexibility, low-temperature brittleness resistance, insulating properties, and water tree resistance, which are examples of the various cable properties, can be ensured by controlling the crystal growth such that the difference in melting point and the difference in the enthalpy of fusion are in the above-described ranges so that crystals are distributed throughout the entire molded body in a well-balanced manner, that is, so that the crystal amount is made uniform. Note that the above-described term "uniform" includes not only completely uniform but also uniform with a predetermined error.

Note that the cooling speed is high on the outer surface side of the resin composition molded body, and thus spherulites in the outer sample are less likely to grow larger than spherulites in the inner sample. Therefore, the difference obtained by subtracting the melting point of the outer sample from the melting point of the inner sample is unlikely to be negative. However, even if the difference obtained by subtracting the melting point of the outer sample from the melting point of the inner sample is negative, the difference in melting point is -8°C or more.

Also, "differential scanning calorimetry" in this specification is performed in conformity with JIS-K-7121 (1987), for example. Specifically, with a DSC device, the temperature is increased from room temperature (e.g., 27°C) to 220°C at 10°C/min. Accordingly, a DSC curve can be obtained by plotting the amount of heat absorbed (heat flow) per unit time with respect to the temperature.

At this time, the temperature at which the amount of heat absorbed per unit time of the sample is at its highest (highest peak) is defined as a "melting point (melting peak temperature)". Also, at this time, presuming that all heat absorbed by the sample is absorbed by the resin components, a value (J/g) obtained by dividing the amount of heat absorbed by the sample (J) from room temperature to 220°C by the mass (g) of all of the resin components in the sample is defined as the "enthalpy of fusion". Note that the degree of crystallinity (%) of the sample can be obtained based on theoretical values of the enthalpy of fusion of the sample and the enthalpy of fusion of a perfect crystal.

### (Resin composition)

The ratio of the components contained in the resin composition for constituting the molded body is preferably adjusted as appropriate depending on the amounts of crystals of the propylene-based resin, the low-crystallinity resin, and the styrene-based resin such that the above-described enthalpy of fusion of the molded body is 55 J/g or more and 90 J/g or less.

Specifically, when the total amount of the propylene-based resin, the low-crystallinity resin, and the styrene-based resin is 100 mass%, the resin composition contains the propylene-based resin in an amount of 55 mass% or more and 85 mass% or less, the low-crystallinity resin in an amount of 5 mass% or more and 15 mass% or less, and the styrene-based resin in an amount of 5 mass% or more and 35 mass% or less, and more preferably contains the propylene-based resin in an amount of 65 mass% or more and 80 mass% or less, the low-crystallinity resin in an amount of 5 mass% or more and 15 mass% or less, and the styrene-based resin in an amount of 10 mass% or more and 30 mass% or less. By mixing the components in such a ratio, the enthalpy of fusion and the melting point can be adjusted in the above ranges with ease.

In the resin composition, the total amount of styrene derived from the styrene-based resin is preferably 0.5 mass% or more and 8 mass% or less, and more preferably 0.5 mass% or more and 5 mass% or less. The total amount of styrene refers to the total amount of the styrene units in the resin composition. It is sufficient that the amount of styrene added is adjusted as appropriate depending on the styrene content in the styrene-based resin used such that the total amount of styrene is in the above-described range. Accordingly, various cable properties can be obtained at a higher level in a well-balanced manner.

Also, from the viewpoint of finely dispersing the styrene-based resin in the propylene-based resin, the low-crystallinity resin content is preferably 0.25 times or more and 2.5 times or less the styrene-based resin. This makes it possible to more reliably disperse the styrene-based resin.

### (Other additive agents)

In addition to the above-described resin components, the resin composition for constituting the molded body may contain an antioxidant, a copper inhibitor, a lubricant, and a coloring agent, for example.

However, it is preferable that the resin composition molded body according to this embodiment contains only a trace amount of the additive agent, which functions as a nucleating agent for producing propylene crystals, for example, and is more preferably substantially free of such an additive agent. Specifically, it is preferable that the content of the additive agent that functions as the nucleating agent is less than 1 part by mass and more preferably 0 parts by mass when the total content of the propylene-based resin, the low-crystallinity resin, and the styrene-based resin is 100 parts by mass, for example. This makes it possible to suppress unexpected abnormal crystallization caused by the nucleating agent, and to easily control the crystal amount.

### (2) Power cable

Next, a power cable according to this embodiment will be described using FIG. 1. FIG. 1 is a cross-sectional view of the power cable according to this embodiment taken along a direction that is orthogonal to the axial direction of the power cable.

A power cable 10 according to this embodiment is configured as a so-called solid insulated power cable. Also, the power cable 10 according to this embodiment is configured to be installed on land (in a pipeline), underwater, or on the bottom of a body of water, for example. Note that the power cable 10 is for alternating current (AC), for example.

Specifically, the power cable 10 includes the conductor 110, an inner semi-conductive layer 120, an insulating layer 130, an outer semi-conductive layer 140, a shielding layer 150, and a sheath 160, for example.

### (Conductor (conductive portion))

The conductor 110 is formed by twisting a plurality of conductor core wires (conductive core wires) that contain pure copper, a copper alloy, aluminum, an aluminum alloy, or the like, for example.

### (Inner semi-conductive layer)

The inner semi-conductive layer 120 is provided so as to cover the outer circumference of the conductor 110. The inner semi-conductive layer 120 is semi-conductive, and is configured to keep an electric field from concentrating on the outer surface side of the conductor 110. The inner semi-conductive layer 120 contains conductive carbon black and at least one type of ethylene-based copolymers such as an ethylene-ethyl acrylate copolymer, an ethylene-methyl acrylate copolymer, an ethylene-butyl acrylate copolymer, and an ethylene-vinyl acetate copolymer, olefin-based elastomers, and the above-described low-crystallinity resin, and the like, for example.

### (Insulating layer)

The insulating layer 130 is provided so as to cover the outer circumference of the inner semi-conductive layer 120, and is configured as the above-described resin composition molded body. As described above, the insulating layer 130 is formed through extrusion molding of the resin composition, for example.

### (Outer semi-conductive layer)

The outer semi-conductive layer 140 is provided so as to cover the outer circumference of the insulating layer 130. Also, the outer semi-conductive layer 140 is semi-conductive, and is configured to keep an electric field from concentrating between the insulating layer 130 and the shielding layer 150. The outer semi-conductive layer 140 is made of the same material as the inner semi-conductive layer 120, for example.

### (Shielding layer)

The shielding layer 150 is provided so as to cover the outer circumference of the outer semi-conductive layer 140. The shielding layer 150 is formed by winding a piece of copper tape, or is formed as wire shield in which a plurality of annealed copper wires or the like are wound, for example. Note that a piece of tape made of a rubberized cloth or the like may be wound around the inner side or the outer side of the shielding layer 150.

### (Sheath)

The sheath 160 is provided so as to cover the outer circumference of the shielding layer 150. The sheath 160 is made of polyvinyl chloride or polyethylene, for example.

Note that the power cable 10 according to this embodiment may include a metal water shielding layer such as a so-called aluminum cover or iron wire armor, outward of the shielding layer 150, if the power cable 10 is an underwater cable or a cable to be installed on the floor of a body of water. On the other hand, the power cable 10 according to this embodiment has the above-described water tree suppression effect, and thus the power cable 10 need not have a metal water shielding layer outward of the shielding layer 150, such as a so-called aluminum cover, for example. That is, the power cable 10 according to this embodiment may have a non-complete water shielding structure.

### (Specific dimensions etc.)

Although there are no particular limitations on specific dimensions of the power cable 10, the diameter of the conductor 110 is 5 mm or more and 60 mm or less, the thickness of the inner semi-conductive layer 120 is 0.5 mm or more and 3 mm or less, the thickness of the insulating layer 130 is 3 mm or more and 35 mm or less, the thickness of the outer semi-conductive layer 140 is 0.5 mm or more and 3 mm or less, the thickness of the shielding layer 150 is 0.1 mm or more and 5 mm or less, and the thickness of the sheath 160 is 1 mm or more, for example. An AC voltage applied to the power cable 10 of this embodiment is 20 kV or more, for example.

### (3) Various cable properties

In this embodiment, the following various cable properties are ensured by reducing variation in the melting point and variation in the enthalpy of fusion of the insulating layer 130 (resin composition molded body) in the thickness direction of the insulating layer 130 while keeping the melting point and the enthalpy of fusion of the insulating layer 130 within predetermined ranges.

Note that, as described above, the "inner sample", which will be described later, refers to a sample collected from a portion of the insulating layer 130 that is located 0.5 mm from the conductor 110 toward the surface of the insulating layer 130. Because the amount of crystals in the inner sample is likely to be large, the various cable properties being satisfied in the inner sample means that the various cable properties of the entire resin composition molded body are also satisfied.

### (Insulating properties)

In this embodiment, the AC breakdown electric field strength of the insulating layer 130 at room temperature (e.g., 27°C) is 60 kV/mm or more, for example. More specifically, the AC breakdown electric field is 60 kV/mm or more when a voltage is applied to the inner sample with a thickness of 0.2 mm under conditions that, at room temperature, an AC voltage with a commercial frequency (e.g., 60 Hz) was applied at 10 kV for 10 minutes, was stepped up every 1 kV, and was applied for 10 minutes, repeatedly.

### (Low-temperature brittleness resistance)

In this embodiment, no cracking occurred when the inner sample was subjected to impact (the inner sample was hit) using an impact tool at -25°C in conformity with JISK7216, for example.

### (Flexibility)

In this embodiment, the tensile modulus of the inner sample is 650 MPa or less, for example. Note that "tensile modulus" refers to a storage modulus obtained by performing measurement in which DVA-200 manufactured by IT Measurement Control Co., Ltd. is used to increase the temperature from -50°C to 200°C in the tensile mode at a temperature increase rate of 10°C/min, and recording data at 30°C.

Also, in this embodiment, when the inner sample is bent at a diameter of 500 mm, the inner sample does not whiten, for example. Note that "whitening" here refers to a state where a color difference occurs between the bent portion and a non-bent portion before and after the sample is bent, and haze occurs.

### (Water tree resistance)

In this embodiment, the maximum length of water trees occurring in the resin composition molded body serving as the insulating layer 130 when an AC electric field with a commercial frequency (e.g., 60 Hz) of 4 kV/mm is applied to the resin composition molded body for 1000 hours, in a state where the resin composition molded body is immersed in a 1 N NaCl aqueous solution at room temperature (27°C), is less than 150 µm, for example. As a result, it is possible to stably suppress dielectric breakdown in the insulating layer 130 caused by water trees.

Note that the water trees occurring in the resin composition molded body are preferably short, and thus there is no limitation on the maximum length of the water trees. However, in this embodiment, because a predetermined amount of water trees may occur through the above-described tests, the maximum length of the water trees occurring in the resin composition is 30 µm or more, for example.

Also, in this embodiment, the concentration of the number of water trees occurring in the resin composition molded body serving as the insulating layer 130 and having a length of 30 µm or more when an AC electric field with a commercial frequency (e.g., 60 Hz) of 4 kV/mm is applied to the resin composition molded body for 1000 hours in a state where the resin composition molded body was immersed in a 1 N NaCl aqueous solution at room temperature (27°C) is less than 150 water trees/cm³, for example. Accordingly, it is possible to stably suppress dielectric breakdown in the insulating layer 130 caused by water trees.

### (4) Method for manufacturing power cable

Next, a method for manufacturing a power cable according to this embodiment will be described. Hereinafter, step is abbreviated as "S".

### (S100: resin composition preparation step)

First, a resin composition for forming a molded body is prepared.

In this embodiment, a mixed material is formed by mixing (kneading) a resin component containing a propylene-based resin, a low-crystallinity resin, and a styrene-based resin, and other additive agents (antioxidant and the like) as needed, using a mixer. Examples of the mixer include an open roll, a Banbury mixer, a pressure kneader, a single-screw mixer, and a multi-screw mixer.

At this time, the components are mixed together such that the propylene-based resin content is 55 mass% or more and 85 mass% or less, the low-crystallinity resin content is 5 mass% or more and 15 mass% or less, and the styrene-based resin content is 5 mass% or more and 35 mass% or less in the resin composition

After the mixed material is formed, the mixed material is granulated using an extruder. As a result, pellet-shaped resin compositions, which are to constitute the insulating layer 130, are formed. Note that the steps from mixing to granulation may be collectively performed using a twin-screw extruder with high kneading action.

### (S200: conductor preparation step)

Meanwhile, the conductor 110 formed by twisting a plurality of conductor core wires together is prepared.

### (S300: cable core formation step (extrusion step, insulating layer formation step))

When resin composition preparation step S100 and conductor preparation step S200 are complete, the insulating layer 130 is formed by extruding the above-described resin composition so as to cover the outer circumference of the conductor 110 at a thickness of 3 mm or more, and cooling the resin composition.

When the extruded resin composition is cooled, excessive crystal growth of the propylene-based resin can be suppressed by the low-crystallinity resin and the styrene-based resin, and thus variation in the crystal growth in the thickness direction can be reduced. This makes it possible to reduce variation in the crystal amount between the outer surface side and the inner side of the obtained insulating layer. Specifically, it is possible to form the insulating layer 130 such that the melting point is 140°C or more and 150°C or less, the enthalpy of fusion is 55 J/g or more and 90 J/g or less, the difference in melting point in the thickness direction is 8°C or less, and the difference in the enthalpy of fusion is 10 J/g or less.

Also, at this time, in this embodiment, the inner semi-conductive layer 120, the insulating layer 130, and the outer semi-conductive layer 140 are formed simultaneously using a three-layer simultaneous extruder, for example.

Specifically, in the three-layer simultaneous extruder, a composition for the inner semi-conductive layer is introduced into an extruder A for forming the inner semi-conductive layer 120, for example.

The pellet-shaped resin composition is introduced into an extruder B for forming the insulating layer 130. Note that the set temperature of the extruder B is set to a temperature that is higher than a desired melting point by a temperature of 10°C or more and 50°C or less. The set temperature is preferably adjusted as appropriate based on the linear velocity and extrusion pressure.

A composition for an outer semi-conductive layer that contains the same material as the resin composition for an inner semi-conductive layer, which is introduced into the extruder A, is introduced into an extruder C for forming an outer semi-conductive layer 140.

Then, the extrudates from the extruders A to C are guided to a common head, and the inner semi-conductive layer 120, the insulating layer 130, and the outer semi-conductive layer 140 are extruded simultaneously onto the outer circumference of the conductor 110 from the inner side to the outer side. As a result, the extruded material, which is to be a cable core, is formed.

Then, the extruded material is cooled using water, for example.

The cable core constituted by the conductor 110, the inner semi-conductive layer 120, the insulating layer 130, and the outer semi-conductive layer 140 is formed through the cable core formation step S300.

### (S400: shielding layer formation step)

After the cable core is formed, the shielding layer 150 is then formed on the outer side of the outer semi-conductive layer 140 by winding a piece of copper tape therearound, for example.

### (S500: sheath formation step)

After the shielding layer 150 is formed, vinyl chloride is introduced into the extruder and extruded, and thus the sheath 160 is formed on the outer circumference of the shielding layer 150.

As a result, the power cable 10 is manufactured as a solid insulated power cable.

### (5) Effects according to this embodiment

According to this embodiment, one or more effects described below are obtained.
(a) The molded body according to this embodiment is made of a resin composition that contains propylene (unit) and styrene (unit) when the molded body is measured through NMR, whose melting point obtained when performing DSC is 140°C or more and 150°C or less, and whose enthalpy of fusion is 55 J/g or more and 90 J/g or less, for example. This resin composition contains random polypropylene, the low-crystallinity resin, and the styrene-based resin as crystalline resin components in a ratio such that the enthalpy of fusion is in a range of 55 to 90 J/g. According to this resin composition, when the resin composition cools from a melted state, excessive crystal growth of the propylene-based resin can be suppressed and controlled by the low-crystallinity resin and the styrene-based resin. Therefore, when the molded body is formed by covering an object with the resin composition at a thickness of 3 mm or more, for example, when the insulating layer of the power cable is formed as the molded body, it is possible to reduce variation in the crystal amount in the thickness direction. That is, crystals can be distributed throughout the entire molded body in a well-balanced manner and the crystal amount can be made uniform. Specifically, it is possible to set the absolute value of the difference in melting point between the outer sample collected from the outer surface side of the molded body and the inner sample collected from the conductor side to 8°C or less, and set the absolute value of the difference in the enthalpy of fusion therebetween to 10 J/g or less. By reducing variation in crystallinity in the thickness direction of the molded body (insulating layer) in this manner, it is possible to soften the insulating layer and improve low-temperature brittleness resistance of the insulating layer while using the polypropylene-based resin. Also, it is possible to suppress deterioration in insulating properties caused by an insufficient crystal amount and to suppress deterioration in insulating properties caused by microcracks in coarse spherulites. Furthermore, the growth of coarse spherulites can be suppressed and amorphous regions can be ensured, and thus it is possible to keep water from concentrating at the interface between spherulites. As a result, the water tree resistance of the resin composition molded body can be improved. In this manner, in this embodiment, it is possible to ensure various cable properties.
(b) In this embodiment, the residue of the crosslinking agent in the resin composition molded body is less than 300 ppm. This makes it possible to improve the recyclability of the molded body. As a result, it is possible to suppress the impact on the environment.
(c) According to this embodiment, the size of crystals is kept from becoming excessively small or excessively large throughout the entire molded body. Also, not only is the crystal amount uniform but also the sizes of crystals are uniform throughout the entire molded body. This makes it possible to improve the insulating properties of the molded body. Specifically, the AC breakdown electric field of the molded body at room temperature can be set to 60 kV/mm or more. As a result, the molded body according to this embodiment can be suitably used as the insulating layer of a power cable.
(d) It is preferable that the molded body according to this embodiment contains an additive agent that functions as a nucleating agent for producing propylene crystals in an amount of less than 1 part by mass where the total content of the propylene-based resin, the low-crystallinity resin, and the styrene-based resin is 100 parts by mass, for example.

Here, if the molded body contains an additive agent that functions as a nucleating agent, the amount of crystals of the resin component will be uniform throughout the molded body due to the nucleating agent. However, the resin composition contains the additive agent, and thus the insulating properties of the molded body may deteriorate due to the additive agent. In this case, microcracks may occur in a portion where abnormal crystal growth has occurred, and the insulating properties thereof may deteriorate.

In contrast, in this embodiment, even if the resin composition molded body contains a small amount of the additive agent that functions as the nucleating agent, by adding the low-crystallinity resin and the styrene-based resin, the amount of crystals of the resin component is kept from becoming excessively large, and variation in the amount of crystals of the resin component in the thickness direction of the resin composition molded body is suppressed. Also, deterioration in the insulating properties of the resin composition molded body caused by the additive agent can be suppressed by reducing the amount of the additive agent that functions as the nucleating agent in the resin composition molded body. Also, by reducing the amount of the additive agent that functions as the nucleating agent in the resin composition molded body, it is possible to suppress unexpected abnormal crystallization caused by the nucleating agent, and to easily control the crystal amount. This makes it possible to suppress deterioration in the insulating properties of the resin composition molded body.

### <Other embodiments of this disclosure>

Although an embodiment according to this disclosure was described in detail above, this disclosure is not limited to the above-described embodiment, and various modifications can be made without departing from the gist thereof.

The embodiment was described in which the resin composition molded body serving as the insulating layer is formed through mechanical mixing and extrusion molding. However, the resin composition molded body may be formed through polymerization and extrusion molding.

Although the embodiment was described in which the power cable 10 need not have a water shielding layer, this disclosure is not limited to this. The power cable 10 may have a simple water shielding layer due to having the above-described remarkable water tree suppression effect. Specifically, a simple water shielding layer is constituted by metal laminated tape, for example. Metal laminated tape includes a metal layer made of aluminum, copper, or the like, and an adhesive layer provided on one or both sides of the metal layer, for example. The metal laminated tape is wrapped longitudinally around the outer circumference of a cable core (outer circumference outward of the outer semi-conductive layer) so as to surround the cable core, for example. Note that this water shielding layer may be provided outward of the shielding layer, or may also serve as the shielding layer. With such a configuration, costs of the power cable 10 can be reduced.

Although the embodiment was described in which the power cable 10 is configured to be installed on land, underwater, or on the bottom of a body of water, this disclosure is not limited to this. The power cable 10 may also be configured as a so-called overhead wire (overhead insulated wire), for example.

Although three-layer simultaneous extrusion is performed in the cable core formation step S300 in the above-described embodiment, three layers may be extruded one by one.

### [Examples]

Next, examples according to this disclosure will be described. These examples are examples of this disclosure, and this disclosure is not limited to these examples.

### (1) Production of power cable

In this example, power cables were produced according to the following procedure.

### (1-1) Materials

The following components were prepared as the materials of the resin composition for forming the insulating layer.

The following was used as the propylene-based resin (A).
Random polypropylene: Melt flow rate: 1.3 g/ 10 min,
Density: 0.9 g/ml,
Melting point: 145°C, and
Enthalpy of fusion: 100 J/g

The following (b1) to (b3) were used as the low-crystallinity resin (B).
(b1) Ethylene-propylene rubber (EPR): Ethylene content: 52 mass%,
Mooney viscosity ML (1+4) 100°C: 40, and
Enthalpy of fusion: none
(b2) Very low density polyethylene (VLDPE1, which is a copolymer of ethylene and 1-butene): 1-butene content: 40 mass%,
Melting point: 95°C,
Enthalpy of fusion: 10 J/g,
Density: 0.88 g/ml, and
Shore A hardness: 66
(b3) Very low density polyethylene (VLDPE2, which is a copolymer of ethylene and 1-octene): 1-octene content: 10 mass%,
Melting point: 55°C,
Enthalpy of fusion: 24 J/g,
Density: 0.87 g/ml, and
Shore A hardness: 70

The following (c1) to (c6) with different styrene contents were used as the styrene-based resin (C).

(c1) Hydrogenated styrenic thermoplastic elastomer (SEBS1): Styrene content: 35 mass%, and hardness: A35

(c2) Hydrogenated styrenic thermoplastic elastomer (SEBS2): Styrene content: 30 mass%, and hardness: A84

(c3) Hydrogenated styrenic thermoplastic elastomer (SEBS3): Styrene content: 20 mass%, and hardness: A67

(c4) Hydrogenated styrenic thermoplastic elastomer (SEBS4): Styrene content: 12 mass%, and hardness: A42

(c5) Hydrogenated styrenic thermoplastic elastomer (SEBS5): Styrene content: 42 mass%, and hardness: A96

(c6) Hydrogenated styrenic thermoplastic elastomer (SEBS6): Styrene content: 47 mass%, and hardness: A93

### (1-2) Preparation of resin composition

The above-described materials were mixed using a Banbury mixer in blend ratios shown in Tables 1 and 2 below and granulated into pellets by an extruder.

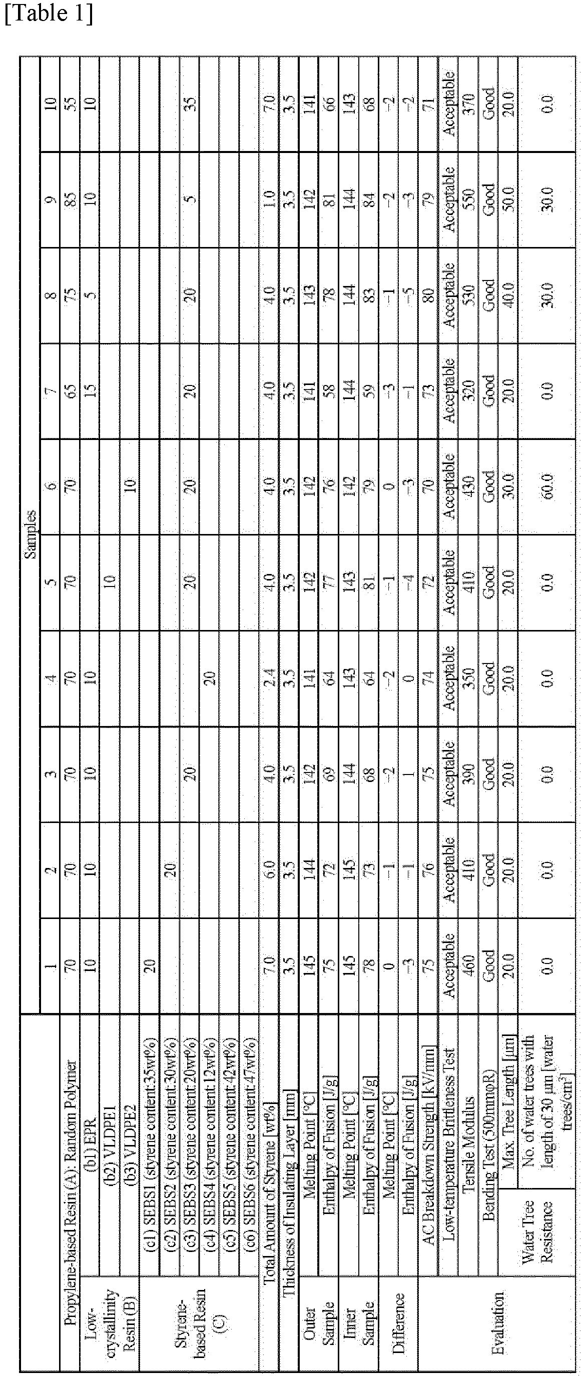

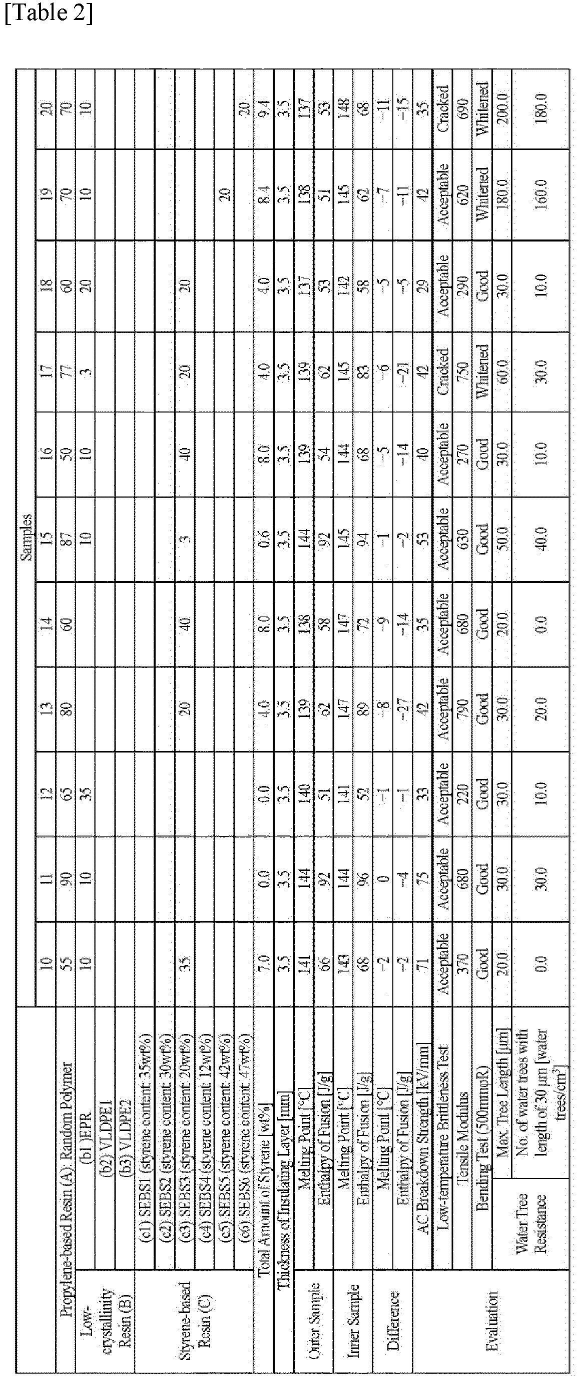

### (Samples 1 to 4)

The sample 1 was prepared such that 70 parts by mass of random polypropylene serving as the polypropylene-based resin (A), 10 parts by mass of (b1) EPR serving as the low-crystallinity resin (B), 20 parts by mass of (c1) SEBS1 whose styrene content serving as the styrene-based resin (C) was 35 mass% were mixed together, and the total amount of styrene contained in the resin composition was 7.0 mass%. Also, the samples 2 to 4 were prepared in the same manner as the sample 1, except that the type of styrene-based resin (C) was changed from (c1) to (c2) to (c4) and the total amount of styrene was changed.

### (Samples 5 and 6)

With the samples 5 and 6, the resin compositions were prepared in the same manner as the sample 3, except that the type of low-cry stallinity resin (B) was changed from (b1) to (b2) or (b3).

### (Samples 7 to 10)

With the samples 7 to 10, the resin compositions were prepared in the same manner as the sample 3, except that the amounts of the propylene-based resin (A), the low-cry stallinity resin (B), and the styrene-based resin (C) added were changed.

### (Samples 11 to 14)

With the samples 11 to 14, the resin compositions were prepared in the same manner as the sample 1, except that the low-crystallinity resin (B) or the styrene-based resin (C) was not added.

### (Samples 15 to 20)

With the samples 15 to 20, the resin compositions were prepared in the same manner as the sample 1, except that the amounts of the propylene-based resin (A), the low-cry stallinity resin (B), and the styrene-based resin (C) added were changed such that the enthalpy of fusion of the molded body is out of the range of 55 to 90 J/g, or the melting point thereof is out of the range of 140°C to 150°C.

### (1-3) Production of power cable samples

Then, a conductor with a cross-sectional area of 100 mm² was prepared. After the conductor was prepared, a resin composition for an inner semi-conductive layer containing an ethylene-ethyl acrylate copolymer, the above-described resin composition for an insulating layer that was prepared in (1-2) above, and a resin composition for an outer semi-conductive layer made of the same material as the resin composition for an inner semi-conductive layer were respectively introduced into the extruders A to C. The extrudates respectively extruded from the extruders A to C were guided to a common head, and the inner semi-conductive layer, the insulating layer, and the outer semi-conductive layer were extruded simultaneously onto the outer circumference of the conductor from the inner side to the outer side. At that time, the thicknesses of the inner semi-conductive layer, the insulating layer, and the outer semi-conductive layer were respectively 0.5mm, 3.5mm, and 0.5 mm. As a result, samples of power cables, each of which including the conductor, the inner semi-conductive layer, the insulating layer, and the outer semi-conductive layer from the center to the outer circumference thereof, were manufactured.

### (2) Evaluation

In this example, with regard to the insulating layers of the produced power cables, the following items were evaluated.

### (2-1) Melting point and enthalpy of fusion

First, the insulating layer of each of the power cables of the samples 1 to 20 was thinly slicing (stripped off), and a test piece was collected as the outer sample from a portion at a depth 0.5 mm from the surface of the insulating layer toward the conductor. Also, a test piece was collected as the inner sample from a position 0.5 mm from the conductor toward the surface, that is, a portion at a depth 2.5 mm from the surface toward the conductor. The thickness of the outer sample and the thickness of the inner sample were 0.5 mm.

The melting point of each sample was obtained through DSC measurement. DSC measurement was performed in conformity with JIS-K-7121 (1987). Specifically, (power compensating) DSC8500 manufactured by PerkinElmer, Inc. was used as a DSC device. A reference sample was α-alumina, for example. The mass of the sample was set to 8 to 10 g. With the DSC device, the temperature was raised from room temperature (27°C) to 220°C at 10°C/min. Accordingly, a DSC curve was obtained by plotting the amount of heat absorbed (heat flow) per unit time with respect to the temperature.

At this time, the temperature at which the amount of heat absorbed per unit time of each sample was at its highest (highest peak) was defined as "melting point". Furthermore, at that time, with the DSC curve, the "enthalpy of fusion" was obtained by obtaining the area of a region surrounded by the melting peak and the base line.

### (2-2) Low-temperature brittleness

The inner sample was subjected to impact (the inner sample was hit) using an impact tool at -25°C in conformity with JISK7216. Whether or not the sample cracked at that time was visually checked. As a result, when the sample did not crack, the sample was evaluated as "A (good)", and when the sample cracked, the sample was evaluated as "B (poor)".

### (2-3) Tensile modulus

The storage modulus at 30°C was obtained by performing a measurement in which the temperature is increased from -50°C to 200°C in the tensile mode at a temperature increase rate of 10°C/min, using DVA-200 manufactured by IT Measurement Control Co., Ltd. As a result, when the tensile modulus was 650 MPa or less, the sample was evaluated as being good.

### (2-4) AC breakdown strength

AC breakdown strength was obtained through an AC breakdown test. Specifically, first, the inner sample with a thickness of 0.5 mm was cut into a sample with a thickness of 0.2 mm. Then, a voltage was applied to the inner sample with a thickness of 0.2 mm under conditions that, at room temperature (27°C), an AC voltage with a commercial frequency (e.g., 60 Hz) was applied at 10 kV for 10 minutes, was stepped up every 1 kV, and was applied for 10 minutes, repeatedly. The electric field strength when the inner sample underwent dielectric breakdown was measured. As a result, when AC breakdown strength was 60 kV/mm or more, the sample was evaluated as being good.

### (2-5) Bending test

The inner sample was bent at a diameter of 500 mm, and whether or not the inner sample was whitened was visually checked. As a result, when the sample did not whiten, the sample was evaluated as "A (good)", and when the sample whitened, the sample was evaluated as "B (poor)".

### (2-6) Water tree resistance

Water tree resistance was evaluated through the following test.

Specifically, first, the insulating layer was stripped off, and two sheets with a thickness of 1 mm were produced. After the sheets were produced, a predetermined semi-conductive sheet was sandwiched between the two sheets so as to form a laminated sheet. After the laminated sheet was formed, wiring was formed on the semi-conductive sheet. Then, an AC electric field with 60 Hz and 4 kV/mm was applied to the sheet between the semi-conductive sheet and the aqueous solution for 1000 hours in a state where the laminated sheet was immersed in a 1 N NaCl aqueous solution at room temperature (27°C). Then, after the predetermined AC electric field was applied, the laminated sheet was dried, and the laminated sheet was dyed by being boiled in a methylene blue aqueous solution. After the laminated sheet was dyed, the laminated sheet was sliced to a thickness of 30 µm along the laminating direction (i.e., a direction orthogonal to a main surface of the laminated sheet) to form an observation slice. Then, water trees occurring in the creeping direction of the semi-conductive sheet or in the direction orthogonal to the main surface of the semi-conductive sheet in the observation slice were observed by observing the observation slice using an optical microscope.

At that time, the maximum length of the water trees occurring in the sheet was measured. Also, the concentration of the number of water trees in the sheet each having a length of 30 µm or more was measured. Note that the "maximum length of water trees" was calculated by rounding off the longest length of the water trees occurring in ten observation slices that were selected at random, and the "concentration of the number of water trees" was calculated by rounding off the average of the concentrations of the numbers of water trees in ten randomly selected observation slices.

In this example, when the maximum length of water trees was less than 150 µm, the sample was evaluated as being good. Also, when the concentration of the number of water trees that had a length of 30 µm or more was less than 150 water trees/cm³, the sample was evaluated as being good.

Note that, for reference, in a conventional evaluation of water tree resistance, a power cable having an insulating layer made of a predetermined resin composition was produced, the power cable was immersed in water, and water trees were evaluated. At that time, a shielding layer and a sheath were provided on the outer side of the insulating layer of the power cable. Therefore, the insulating layer did not come into direct contact with water. In contrast, in this example, as described above, the laminated sheet was directly immersed in a predetermined aqueous solution, and water trees were evaluated. Therefore, the sheet was brought into direct contact with the aqueous solution. Thus, water tree resistance was evaluated in this example under more severe conditions than in the evaluation using a conventional power cable.

### (3) Results of evaluation

The results of the evaluations are outlined in Tables 1 and 2.

As shown in Table 1, it was confirmed that, with the samples 1 to 10, the difference in the enthalpy of fusion and the difference in melting point in the thickness direction of the insulating layer were reduced by mixing the propylene-based resin (A), the low-crystallinity resin (B), and the styrene-based resin (C) in a predetermined composition, and the various cable properties were obtained at a high level in a well-balanced manner.

In contrast, as shown in Table 2, it was confirmed that, with the samples 11 and 12, the low-crystallinity resin (B) was added without adding the styrene-based resin (C), and variation in crystallinity in the thickness direction was reduced, while with the sample 11, the amount of crystals in the outer sample of the sample 11 was excessively large, and thus desired flexibility was not obtained. On the other hand, it was confirmed that, with the sample 12, desired insulating properties were not obtained because the amount of crystals in the outer sample was excessively small.

Also, it was confirmed that, with the samples 13 and 14, the low-crystallinity resin (B) was not added, and thus variation in the crystal growth in the thickness direction was not suppressed, and there was significant variation in the crystallinity.

Also, it was confirmed that, with the samples 15 and 16, probably because the styrene-based resin (C) was added in an excessively small or large amount, the enthalpy of fusion and the melting point of the outer sample could not be adjusted in predetermined ranges and desired insulating properties or the flexibility were not obtained.

Also, it was confirmed that, with the samples 17 and 18, because the low-crystallinity resin (B) was added in an excessively small or large amount with respect to the propylene-based resin (A), various desired cable properties were not obtained.

Furthermore, it was confirmed that, with the samples 19 and 20, the styrene content in the used styrene-based resin (C) was high and the total amount of styrene contained in the molded body was excessively large, and thus not only the insulating properties but also the desired flexibility and low-temperature brittleness resistance were not obtained.

### <Preferable aspects of the present disclosure>

Hereinafter, preferable aspects of this disclosure will be supplementarily described.

### (Supplementary Description 1)

A resin composition containing:
propylene;
ethylene; and
styrene,
in which the resin composition has a melting point of 140°C or more and 150°C or less, and
the enthalpy of fusion of the resin composition is 55 J/g or more and 90 J/g or less.

### (Supplementary Description 2)

A resin composition molded body that is made of a resin composition and with which an object is covered at a thickness of 3 mm or more, the molded body containing:
propylene;
ethylene; and
styrene,
in which the molded body has a melting point of 140°C or more and 150°C or less,
the enthalpy of fusion of the molded body is 55 J/g or more and 90 J/g or less, and
when an outer sample is collected from a position 0.5 mm from a surface of the molded body toward the object and an inner sample is collected from a position 0.5 mm from the object toward the surface,
an absolute value of a difference obtained by subtracting the melting point of the outer sample from the melting point of the inner sample is 8°C or less, and
an absolute value of a difference obtained by subtracting the enthalpy of fusion of the outer sample from the enthalpy of fusion of the inner sample is 10 J/g or less.

### (Supplementary Description 3)

In Supplementary Description 2,
a residue of a crosslinking agent is less than 300 ppm.

### (Supplementary Description 4)

In Supplementary Description 2 or 3,
an AC breakdown electric field at room temperature is 60 kV/mm or more.

### (Supplementary Description 5)

In any one of Supplementary Descriptions 2 to 4,
the resin composition contains a propylene-based resin, a low-crystallinity resin, and a styrene-based resin,
the enthalpy of fusion of the propylene-based resin is 90 J/g or more and 105 J/g or less, and the propylene-based resin has a melting point of 140°C or more and 150°C or less, and
the low-crystallinity resin is a copolymer containing at least two of ethylene, propylene, butene, hexene, and octene.

### (Supplementary Description 6)

In Supplementary Description 5,
the resin composition contains the propylene-based resin in an amount of 55 mass% or more and 85 mass% or less, the low-crystallinity resin in an amount of 5 mass% or more and 15 mass% or less, and the styrene-based resin in an amount of 5 mass% or more and 35 mass% or less where the total amount of the propylene-based resin, the low-crystallinity resin, and the styrene-based resin is 100 mass%.

### (Supplementary Description 7)

In Supplementary Description 5 or 6,
the styrene content in the styrene-based resin is 5 mass% or more and 35 mass% or less.

### (Supplementary Description 8)

In any one of Supplementary Descriptions 5 to 7,
the total amount of styrene in the resin composition is 0.5 mass% or more and 8 mass% or less.

### (Supplementary Description 9)

In any one of Supplementary Descriptions 5 to 8,
the styrene-based resin is a styrene-based thermoplastic elastomer containing styrene as a hard segment and at least one of ethylene, propylene, butylene, isoprene, and the like as a soft segment.

### (Supplementary Description 10)

In any one of Supplementary Descriptions 5 to 9,
the propylene-based resin is random polypropylene.

### (Supplementary Description 11)

In any one of Supplementary Descriptions 5 to 10,
the low-crystallinity resin is a copolymer containing at least one of ethylene and propylene.

### (Supplementary Description 12)

In any one of Supplementary Descriptions 5 to 11,
the low-crystallinity resin does not have a melting point or has a melting point of 100°C or less, and the enthalpy of fusion of the low-crystallinity resin is 50 J/g or less.

### (Supplementary Description 13)

A power cable including:
a conductor; and
an insulating layer with which an outer circumference of the conductor is covered at a thickness of 3 mm or more,
in which the insulating layer contains propylene, ethylene, and styrene,
the molded body has a melting point of 140°C or more and 150°C or less,
the enthalpy of fusion of the molded body is 55 J/g or more and 90 J/g or less, and
when an outer sample is collected from a position 0.5 mm from a surface of the insulating layer toward the conductor and an inner sample is collected from a position 0.5 mm from the conductor toward the surface,
an absolute value of a difference obtained by subtracting the melting point of the outer sample from the melting point of the inner sample is 8°C or less, and
an absolute value of a difference obtained by subtracting the enthalpy of fusion of the outer sample from the enthalpy of fusion of the inner sample is 10 J/g or less.

### Reference Signs List

- 10: Power cable
- 110: Conductor
- 120: Inner semi-conductive layer
- 130: Insulating layer
- 140: Outer semi-conductive layer
- 150: Shielding layer
- 160: Sheath

## Claims

1. A resin composition comprising:
propylene;
ethylene; and
styrene,
wherein the resin composition has a melting point of 140°C or more and 150°C or less, and
an enthalpy of fusion of the resin composition is 55 J/g or more and 90 J/g or less.

2. A resin composition molded body that is made of a resin composition and with which an object is covered at a thickness of 3 mm or more, the molded body comprising:
propylene;
ethylene; and
styrene,
wherein the molded body has a melting point of 140°C or more and 150°C or less,
an enthalpy of fusion of the molded body is 55 J/g or more and 90 J/g or less, and
when an outer sample is collected from a position 0.5 mm from a surface of the molded body toward the object and an inner sample is collected from a position 0.5 mm from the object toward the surface,
an absolute value of a difference obtained by subtracting the melting point of the outer sample from the melting point of the inner sample is 8°C or less, and
an absolute value of a difference obtained by subtracting the enthalpy of fusion of the outer sample from the enthalpy of fusion of the inner sample is 10 J/g or less.

3. The resin composition molded body according to claim 2,
wherein a residue of a crosslinking agent is less than 300 ppm.

4. The resin composition molded body according to claim 2 or 3,
wherein an AC breakdown electric field at room temperature is 60 kV/mm or more.

5. A power cable comprising:
a conductor; and
an insulating layer with which an outer circumference of the conductor is covered at a thickness of 3 mm or more,
wherein the insulating layer contains propylene, ethylene, and styrene,
the molded body has a melting point of 140°C or more and 150°C or less,
an enthalpy of fusion of the molded body is 55 J/g or more and 90 J/g or less, and
when an outer sample is collected from a position 0.5 mm from a surface of the insulating layer toward the conductor and an inner sample is collected from a position 0.5 mm from the conductor toward the surface,
an absolute value of a difference obtained by subtracting the melting point of the outer sample from the melting point of the inner sample is 8°C or less, and
an absolute value of a difference obtained by subtracting the enthalpy of fusion of the outer sample from the enthalpy of fusion of the inner sample is 10 J/g or less.
